# EUROPEAN PATENT APPLICATION

(11) **EP 3 007 120 A1**
(43) Date of publication of application: **13.04.2016**
(21) Application number: 14187840.5
(22) Date of filing: 06.10.2014
(51) Int. Cl.: G06Q 20/18, G07F 19/00

(54) **Operating a banking application in a terminal computer, with a service module to access devices and to provide services**

(71) Applicant: DPS Engineering GmbH, 70771 Leinfelden-Echterdingen (DE)
(72) Inventor: Prigge, Johann, 70771 Leinfelden-Echterdingen (DE)
(74) Representative: Zahn, Matthias

(57) **Abstract**

In a computer system (100), a first computer (101) is self-service banking terminal with a plurality of devices (141). The first computer (101) has a first browser (131), and a second computer (102) has a second browser (132). A web server (103) is connected to a banking transaction computer (104) and is adapted to communicate with the first computer (101) and with the second computer (102) through an IP connection (110). The web server (103) is adapted to operate in parallel with both the first computer (101) and the second computer (102) through internet banking application pages (151, 152) to perform transactions with the banking transaction computer (104). In the first computer (101), a service module (161) - upon receiving a service request (171) from the internet banking application pages (151/152) - instructs the plurality of devices (141) to operate sequences of predefined steps.

## Description

### Technical Field

The description relates to computers in general, and to terminal computers in the context of banking applications in particular. The description also relates to a method, to a computer program product, and to a computer system.

### Background

Banks o r other financial institutes provide banking applications that allow bank customers to electronically communicate with the bank. The communication aims at checking the status of bank accounts, at making financial transactions such as to transfer money or to place standing orders, at ordering financial services or the like. The bank applications implement a variety of user interactions, starting with the authorization of the costumer user with a card and a personal identification number (PIN). Further interactions include, for example, input operations (e.g., regarding the monetary amounts in relation to the transaction), and output operations (e.g., giving a status overview to bank accounts on screen or paper).

The customers are the users of computers that are connected to centralized computer systems often referred to as back-end system. The back-end system actually performs the transactions and stores account information in databases.

The banking applications are currently available in two domains that differentiate, for example, according to the physical location of the computers and of the customers.

In a first domain, the computers are self-service banking terminals (or interactive kiosks as synonym) run by the bank. The terminals can be placed at publicly available locations such as bank buildings, shopping areas, airports or railway stations. Optionally, the terminals include automated teller machines (ATMs) or cash dispensers. The terminals can be designed for indoor or for outdoor use. In any case, the terminals need appropriate protection against physical threats. The threats result from external dangers or influences such as vandalism, climate or weather, theft etc., or result from more intrinsic circumstances, such as 24 hour operation etc. As a consequence, the terminals and their components are ruggedized.

In the first domain, the protection is not limited to the terminal, but further extends to the customers. Authorised customer users need to be protected against (non-physical) threats such as fraud, data espionage or the like. Preserving privacy is of paramount importance. The information exchanged between the customers - the computer users - and the back-end systems is confined to the particular user/customers and the bank. The computers and all elements in the connection to the back-end systems must technically be protected against eavesdropping, or other form of malicious attacks. As mentioned, in the first domain the terminals are typically operated in a public area. The customer in front of the terminal shares a room with other persons, who are potential customers lining up for the terminal to become free, or who are even potential attackers that wait for an opportunity to gain unauthorized access to the terminal.

As a consequence, terminal components that handle customer data and/or handle money are designed especially in view of public use enablement. These components are devices (such as printers, scanners or card readers) that are dedicated for public use.

For example, the terminals have devices that authenticate the users. The user inserts the card into a reader device and enters the PIN into an encrypting pin-pad (EPP) device that immediately encrypts the PIN before it is further processed. The cards are also known as bank cards, client cards, key cards, cash cards, ATM card. Other devices, such as biometric sensors or transmitters for near field communication (NFC), can also be used.

Public use enablement is not limited to the devices. Dedicated operating schemes can also contribute to privacy. For example, the terminal can retain the card if the personal identification number (PIN) was incorrectly entered (e.g., 3 times). Non-attendance of transaction suggestions (e.g., data input requests from the computer) can lead to abortion of the transaction.

With the dedicated hardware and operating schemes, the terminals accommodate situations that potentially put the privacy in danger. For example, during transactions, the users might be distracted and might go away from the terminal.

In an exemplary scenario, a mother with a child uses her card and the EPP to authenticate, and interacts with the terminal to perform a transaction. Being occupied by the transactions, for a moment she loses control over her child but she has to attend the child. The terminal not receiving any input from her for a couple of seconds will request an input but will finally abort the transaction and retrieve the card.

In a different example, the terminal has a printer and optional components. The printer has a special function to keep the paper if the user does not take it out from the terminal.

In a second domain, the computers are standard or off-the-shelf computers, such as desktops, notebooks, or mobile devices (e.g., smartphones) that are operated by the customers, in non-public environments. Most of the above-mentioned threats are absent or can be accommodated by the user. For example, the user will use the computer at home, for a couple of hours only. Very often, the computers in the second domain are consumer computers. Looking at the technical connections between the computers and the back-end system via web servers, the second domain is also referred to as "Internet banking", "online banking", "e-banking", "virtual banking", "home banking", "direct banking" or otherwise.

In the second domain, public use enablement is not required. The user has control over the location, and usually performs transactions in rooms that are not shared by other persons. Usually, the computer in the second domain is therefore not equipped with public use enabled devices. Special functions that preserve privacy are implemented with hardware that is available. For example the user is requested to input a personal identification number (PIN), a transaction authentication number (TAN) or similar information via a keyboard or a touchscreen.

Looking at the software implementation, the computers in both domains use operating systems, such as MICROSOFT WINDOWS, or LINUX. In the second domain, other operating systems are also available, such as ANDROID.

For banking applications in the first domain, the self-service terminals use specialized applications, such as terminal clients. A terminal client can have a variety of components or layers, such as a run-time image, a kernel, and a hardware adaptation layer. In an example, the run-time image handles communication with the back-end system and the run-time image controls interactions with the user (e.g., mask flow) and sends messages to the back-end. The kernel establishes communication connections to the back-end. The adaptation layer establishes the communication with the hardware from different terminal manufacturers via software platforms provided by these terminal manufacturers. For example, terminal clients are commercially available for terminal computers from DPS Engineering GmbH, in Leinfelden-Echterdingen, Germany.

For banking applications in the second domain, internet browsers run directly on the operating system. The browser execute web pages (e.g., in HTML or JAVA SCRIPT code) received from the above-mentioned web servers of the back-end system. Browsers that execute web pages could also be used in the first domain.

For the software implementation, the bank being the provider of the banking applications has to maintain banking applications in parallel. The bank has to provide the terminal client for the first domain and the bank has to provide the web pages for the second domain. The consequence is double programming that is not desired.

Further, the software is not static, but has to be maintained and updated. For example, banking applications in Europe had recently been updated to accommodate bank transfers in the Single Euro Payments Area (SEPA). Or, security patches have to be installed. In combination with double programming, software updates add complexity.

### Summary

According to embodiments of the present invention, a computer system has a first computer, a second computer, and a web server. The first computer is a self-service banking terminal with a plurality of devices, and the first computer has a first internet browser. The second computer has a second internet browser. The web server is connected to a banking transaction computer and is adapted to communicate with the first computer and with the second computer through an IP connection. The computer system is characterized in that the web server is adapted to operate in parallel with both the first computer and the second computer through internet banking application pages to perform transactions with the banking transaction computer. The first computer has a service module. Upon receiving a service request from the internet banking application, the service module instructs the plurality of devices to operate sequences of predefined steps. This approach allows the self-service banking terminal to operate with regular internet application pages.

Optionally, the internet banking application pages that run in the internet browsers of the first and second computers is substantially the same for both internet browsers. Optionally, the internet banking application pages (that run in the internet browsers of the first and second computers) are customized into versions for the first computer and for the second computer. Customizing can be implemented by distinctive sets of user interface elements. The set can be different in terms of parameters for the screen size, different HTML-code, different graphics or the like. It is advantageous that customizing does not need to be extended to the service requests. The particulars of banking terminals and its devices are accommodated by the service module, and not by customizing a web page.

Optionally, the service module is implemented as an applet for a first internet browser of the first computer. It is advantageous that the first computer can obtain the applet from the web server via the same technical channel (the IP connection) as the internet banking application pages. There is no need for a different channel. The web server can automatically recognize that the first computer is a self-service banking terminal and can send the pages of the internet banking application to the banking terminal in combination with the applet.

Optionally, the applet is a JAVA applet and the service requests from the internet banking application pages are implemented by JAVA SCRIPT. This is advantageous also for the developer of both internet banking application pages (and the application in the back-end) and the applet to use similar technology.

Optionally, the applet and the internet banking application pages use the same run-time environment of the first internet browser in the first computer.

Optionally, the terminal computer receives the internet banking application pages and the service module from the web server, and the service module triggers the operation of the internet banking application pages. Since the internet banking application needs the service module to communicate with the devices, it is advantageous to let the internet banking application pages operate only when the service module has been activated.

According to a further embodiment, the invention is described as a computer-implemented method for initialising the operation of an internet banking application to be executed in the run-time environment of a browser in a terminal computer. The terminal computer has a plurality of devices that perform services as sequences of steps. In a receiving activity, the terminal computer receives an applet from a web server via an IP connection. In a starting activity, the run-time environment of the browser starts to execute the applet. In an initialising activity, the browser is controlled by the applet, the browser receives the pages of the internet banking application from the web server and the applet causes the run-time environment of the browser to execute the internet banking application.

Further, the internet banking application pages are operated or executed in communication with the plurality of devices, such that the applet performs the following: The applet receives a service request from the internet banking application pages. The applet - or, in an alternative a control module - forwards a sequence of instructions - for steps that correspond to the service request - to at least one particular device of the plurality of devices for execution. To accommodate different hardware, the instructions go to and from the devices via a platform that is specific for the manufacturer of the terminal.

The following examples are applicable for the service request and the sequence of instructions for steps:
For example, the service request (DoLegitimateCustomer) relates to user authentication and/or legitimation, and the corresponding instructions relate to steps that include to operate a card reader and to operate an encrypting pin-pad (EPP).
For example, the service request relates to printing (DoPrintPDF), and the corresponding instructions relate to steps that include to operate a printer to present a printed document to a user and to physically return the printed document into the first computer if the user does not take the printed document, after a predefined period.
For example, the service request relates to a time-out request for user interaction, and the corresponding instructions relate to steps that periodically check if user interface devices receive input from the user.
For example, the service request (DoScanDocument) relates to document scanning, with corresponding instructions to a document scanner, and to process the document with optical character recognition (OCR).
For example, the service request (DoKeepAlive) relates to a monitoring function, with corresponding instructions from the application pages to signal the availability of the application pages to the applet.
For example, the service request (DoSendJournal) relates to logging data in a journal, with corresponding instructions for steps that include to collect data that relate to the operation of the internet banking application.
For example, the service request (DoEndSession) relates to technical information directed to the applet, with corresponding instructions for steps to terminate the customer session (e.g., to dispense the card).
For example, the service request (GetAllDeviceState) relates to technical information, with corresponding instructions for steps that include to detect the current states of the devices.
For example, the service request (GetConsumerState) relates to technical information, with corresponding instructions for steps that include to detect if the user has interacted with a device of the terminal within a predetermined period of time.
For example, the service request (GetConnectionState) relates to technical information with corresponding instructions for steps that include to detect the current states of connections to external systems, such as banking transaction system and maintenance server.
For example, the service request (GetPrinterState) relates to technical information, with corresponding instructions for steps that include to detect the current state for a printer.
For example, the service request (GetScanState) relates to obtain technical information, with corresponding instructions for steps that include the detection of the current state for a document scanner.
For example, the service request (GetAIIEvents) relates to technical information, with corresponding instructions for steps that include the reporting of current event messages.
For example, the service request (GetDeviceEvents) relates to technical information, with corresponding instructions for steps that include the reporting of events in connections with the hardware of the devices.
For example, the service request (GetFraudEvents) relates to obtain information, with corresponding instructions for steps that include the reporting of events that indicate suspicious fraud.
For example, the service request (GetAllAlerts, GetPrinterAlerts, GetScanAlerts) relates to technical information, with corresponding instructions for steps that include the reporting of alert events, such as alert events for the printer and the document scanner.

Optionally, in the computer-implemented method, the sequence of instructions for steps include acknowledgements that the applet receives from the particular device.

Optionally, the applet forwards the sequence of instructions for steps to the particular device through a control module. The applet can forward the sequence of instructions through the control module being a module that runs on top of the operating system of the terminal computer and that provides abstraction for devices built into terminals from different terminal manufacturers. The control module can be pre-installed on the terminal computer, and the control module is independent from the internet banking application. The control module can re-use some or all components of the terminal clients mentioned in the background section.

The invention also relates to a computer program product that when loaded into a memory of a terminal computer and being executed by at least one processor of the terminal computer performs the activities or steps of the computer-implemented method.

From a further perspective, a banking terminal communicates via an IP connection with a web server. The banking terminal has a control module to control a plurality of devices, and a browser to execute an internet banking application to communicate with the web server via the interface. The banking terminal is characterized by having a service module that establishes the communication with the internet banking application, and that - upon receiving a service request from the internet banking application - accesses at least a particular device of the plurality of devices to perform a sequence of predefined steps that correspond to the service request.

This approach allows the devices to be public-use-enabled device, i.e., device that communicates data (or money) to/from a user of a terminal computer, that can be connected to (or integrated into) a terminal computer, and that have technical features that are responsive to potential threats to the terminal computer, or have technical features to retain the privacy of the user. In operation, the devices perform a sequence of steps, collectively referred to as "service". There are services involving only one device, and there are services involving multiple devices. The step sequence is programmed into the service module, and the service module can be implemented as an applet to run in the browser in parallel to the internet banking application. Usually, these services are not available by standard operating systems.

The approach is also in line with the trend to harmonized users interfaces. For example, touch screen technologies had had been widely used in banking terminals, but recently more and more consumer devices have been equipped with touch screens as well. The designers working for the bank potentially do not have to differentiate between web pages for the first domain and web pages for the second domain any longer. For example, the designers of the web page (in the banking domain) are no longer required to provide web pages that are domain specific. Differences that take domain specifics into account can be accommodated by customizing, wherein the structure of the web pages remains unchanged. For example, the difference can relate to the haptic or to the size of touch-screens. The differentiation can also relate to user interface elements that are specific for each domain.

To stay with the above-mentioned example, the designer provides code for a print function. If the web page is interpreted by a browser in the first domain, print instructions are handled through the service module (and the control module). If the web page is interpreted by a browser in the second domain, the printing is performed through the printer driver of the operating system.

The approach enables the operation of a regular internet application with a self-service terminal. The public-use specific functions - provided by devices and services - are implemented by the service module that receives commands and service requests from the internet application in an application-native format such as JAVA SCRIPT.

The above-mentioned double programming of banking functions, including code for transactions and for user interaction, is not required. It is sufficient for the designer to write the code once. Particulars of the specific hardware are accommodated by the service module. The service module is provided for the terminal computers in the first domain only, there is no need to forward the code for the service module to the computers in the second domain, the home domain.

Recent technical developments provide web pages that are adaptive to different types of computers, for example, web pages that display content differently for computers with relatively small screens (e.g., in case of mobile devices) and for computers with relatively large screens (e.g., in case of desktop or notebook computers). However, a differentiation or page adaptation is not required. The adaptation to the terminal specifics can substantially be done by the service module in the terminal. Designers of internet applications can ignore the specifics of a self-service terminals.

### Brief Description of the Drawings

FIG. 1 illustrates a block diagram of a computer system according to an embodiment;
FIG. 2 illustrates a flow-chart for a start-up procedure;
FIG. 3 illustrates a diagram for the communication that involves a service module in a terminal computer; and
FIG. 4 illustrates a comparison between an embodiment and a traditional approach.

### Detailed Description

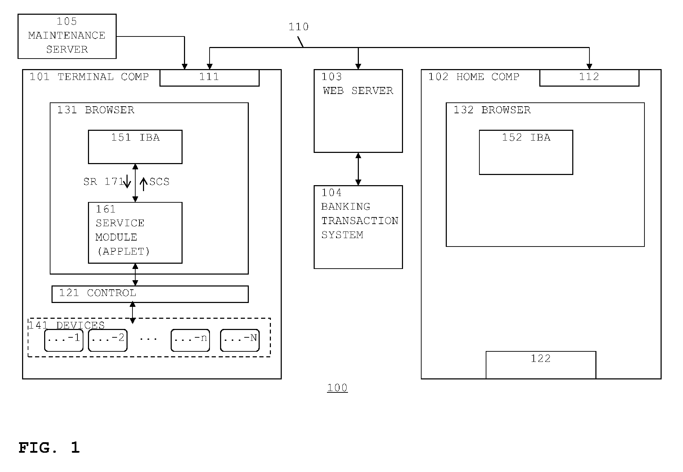

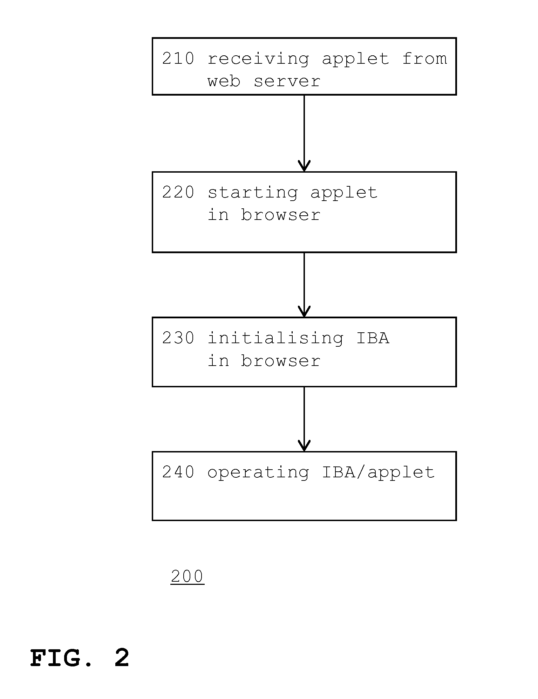

FIG. 1 illustrates a block diagram of computer system 100 according to an embodiment. FIG. 1 illustrates the system in operation. Details for a start-up procedure are illustrated in connection with FIG. 2.

As illustrated, computer system 100 comprises first computer 101 (or "terminal computer", "banking terminal"), second computer 102 (or "home computer"), web server 103, banking transaction system 104, and - optionally - maintenance server 105.

Terminal computer 101 is a self-service banking terminal or an interactive kiosk. Terminal computer 101 is run by the bank at a publicly available location such as a bank building, a shopping area, an airports or a railway station. Although illustrated in the figure by a single computer, in real implementations, there are many terminal computers provided. Depending on the size, a bank might operate hundreds or thousands of terminal computers.

Home computer 102 is a computer that is regularly owned and controlled by the customer, in a private place. Although illustrated in the figure by a single computer, in real implementations, the number of home computers roughly corresponds to the number of bank customers that use internet banking. A single customer can use internet banking with different devices: mobile phones, desktop computers, notebook computers, table personal computer (tablet PC) or the like.

Web server 103 provides web pages (e.g., HTML, JAVA SCRIPT) that implement transaction logic, user interaction for banking, or other logic. In the embodiment, the web pages are executed as pages 151/152 of an internet banking application (IBA).

Banking transaction system 104 is connected to web server 103. Banking transaction system 104 collectively refers to computers that provide functionality for banking. For example, banking transaction system 104 includes an application server running an application - an internet banking application (IBA) - for executing banking logics, for controlling banking processes, for activities in connection with authorizations, limit checks, account bookings, order forwarding, payment routing and for other activities. Banking transaction system 104 also includes databases.

Maintenance server 105 is coupled to terminal 101 and provides control and monitoring functions, with the goal to sustain uninterrupted operation of terminal computer 101. For example, in case of failure, maintenance server 105 provides alarm messages to service personnel. Maintenance server 105 also keeps audit-relevant information (e.g., the session tokens, information regarding events) in logs, journals or other data structures. The information stored by maintenance server 105 can optionally include information relating a particular transaction. For example, in case that a transaction was interrupted, maintenance server 105 stores technical details (e.g., malfunction of a printer), or - optionally - administrative details (e.g., insufficient money on the user's account) provided that such information was transmitted to the service module via the respective service request (DoSendJournal, see above). Maintenance server 105 is an optional component in the system. Maintenance server 105 is not coupled to home computer 102. A clear separation of concern is possible with respect to system 104.

In other words, web server 103, banking transaction system 104, and maintenance server 105 are servers that support the operation of terminal 101. The servers are protected against attacks from the internet.

IP connection 110 collectively refers to the connections of web server 103 with terminal computer 101 and home computer 102, via the TCP/IP protocol. The communication on top of the TCP/IP protocol uses HTTPS. It is also possible to use the Homebanking Computer Interface (HBCI) standard. The connection must not necessarily be the Internet, but can also be an intra-company network connection. IP connection 110 can include routers or other standard equipment (not illustrated for simplicity).

Interface 111 of terminal computer 101 is an interface to the intra-company network of the bank (intra-bank network). For connections via the internet, virtual private networks (VPN) technologies can be used. Technically, interface 111 can be implemented, for example, as a local area network (LAN) connection.

Interface 112 at home computer 102 is an interface to the internet. Exemplary physical connections include LAN that is wired or wireless (WLAN, WiFi).

Control module 121 at terminal computer 101 is communicatively connected to the devices. Control module 121 runs on top of the operating system and on top of the platform provided by the terminal manufacturer. The control module includes an adaptation layer to accommodate different terminal manufacturers and types. Control module 121 communicates commands and instructions to the devices via the platform that is provided by the terminal manufacturer.

Second interface 122 of home computer 102 collectively stands for the user interface (UI). The UI-elements such as a touch-screen, a mouse, a printer, the user interface have software support in the operating system running on computer 102. For example, the operating system supports drivers.

Browser 131 is a browser running at terminal computer 101, and browser 132 is a browser running at home computer 102. The browser can be regular internet browser, such as INTERNET EXPLORER, FIREFOX, GOOGLE CHROME. Browser 131 and 132 provide run-time environments (RTEs) for executing code in the programming languages HTML or JAVA SCRIPT. Browser 131 and 132 can also provide run-time environments for programs in the programming language JAVA. Persons of skill in the art can install run-time environments into browsers without the need of further explanation herein. An example for an JAVA RTE is the RTE commercially available from ORACLE CORP. as a plug-in to the browser. Some browsers have the JAVA RTE integrated so that further installations are not required.

The plurality of devices 141 (or devices 141) comprises devices that are specifically adapted to situations of public premises. The devices can provide the user interface to the user of terminal computer 101. Devices 141 can be integral components of terminal computer 101.

The particular devices are referenced as device 141-1, device 141-2, and so on through device 141-N. Examples for the devices are: touch screen, keyboard, pointing device (e.g., mouse or trackball), printer, document scanner, biometric sensor, card reader, the EPP, cash dispenser and the like.

The devices are implemented for use in the banking terminal and the device are public-use enabled. In other words, the devices are devices that are typical for self-service banking terminals. For example, the card reader does not only read card data, but is able to retain the card inside the terminal if the card reader receives a corresponding instruction (RETAIN). For example, the printer allows bundling: to print a document (e.g., account statement) to a number of pages and to output all pages together when printing has been completed.

Internet banking application (IBA) pages 151 run in browser 131 of terminal computer 101. Internet banking application (IBA) pages 152 run in browser 132 of home computer 102. Both IBA-pages 151 and IBA-pages 152 can be implemented in HTML, JAVASCRIPT or other code. Computers 101 and 102 receive IBA-pages 151/152 from webserver 103.

Both IBA-pages 151 and 152 are substantially the same in function and structure. Minor differences can be provided, by customizing, such as with respect to colour of user interface elements, to the size of numbers and letters on screen and the like. As mentioned above, customizing can include to differentiate graphics or HTML-code.

IBA-pages 151/152 are designed to be executed in a standard browser. In a traditional approach, IBA-pages 151 would not be able to access the devices 141.

Service module 161 provides access to device 141-1 ... 141-N via control module 121. The functions of the plurality of device 141 are not only performed by the devices alone, but can be performed in combination with other modules, such as IBA-pages 151 and control module 121. In such cases, IBA-pages 151 send a service request (SR) 171 to service module 161, service module 161 interacts with a particular device according to a predefined service scheme, and, optionally, service module 161 returns a service completion signal (SCS) to IBA-pages 151. It can be advantageous that service module 161 abstracts from the complexity of the details of the operation of the devices. This abstraction can be advantageous during run-time and also at design-time for the designer.

Service module 161 can also be considered as a peripheral connect module, or service framework module. Service module 161 provides an application program interface (API) to the plurality of devices 141 for controlling the devices.

Service module 161 can be implemented as an applet, i.e., a program being executed by the RTE of browser 131. In this case, the applet is received from web server 103. As mentioned, the applet can be implemented in the programming language JAVA.

Regarding the users, it should be noted that one and the same bank customer can sometimes be the user of terminal computer 101 or the user of home computer 102. Thereby, the same look-and-feel of the user-interface (e.g., graphical user interface GUI) can be advantageous, especially, the way the interaction is provided by the internet banking application 151/152 (substantially the same). In some situations, special announcements can be triggered by service module 161 (e.g., the instructive instruction to take out the paper from the printer). Potentially, the user can change between terminals (or channels). For example, the users scans a document (e.g., a transfer voucher) at terminal computer 101 but continues to work on this document at home computer 102.

FIG. 2 illustrates a flow-chart for a start-up procedure 200, or computer-implemented method. This section also refers to security aspects. The flow-chart is explained for the embodiment with service module 161 being a JAVA applet.

In receiving 210, terminal computer 101 receives the applet from web server 103 (via IP connection 110). For security, the applet is signed and configured accordingly. In starting 220, the browser begins to execute the applet. In initialising 230, the applet causes the browser to receive IBA-pages 151 from web server 103 and causes the browser to execute IBA-pages 151.

In operating IBA-pages/applet 240, terminal computer 101 has reached its normal mode of operation, and can perform the services. Once the applet is running, it interacts with control module 121. The operation continues as described in connection with FIG. 1.

For security, the communication between IBA-pages 151 and service module 161, and between service module 161 and module 121 can be secured by security tokens that communicate session IDs. The communication between these components can further be secured by bi-directional time-outs, i.e., the communication is interrupted if predefined time-periods without signal exchange have lapsed.

Also, the applet can monitor the execution of IBA-pages 151 by browser 131. Examples for the services will be provided in the following.

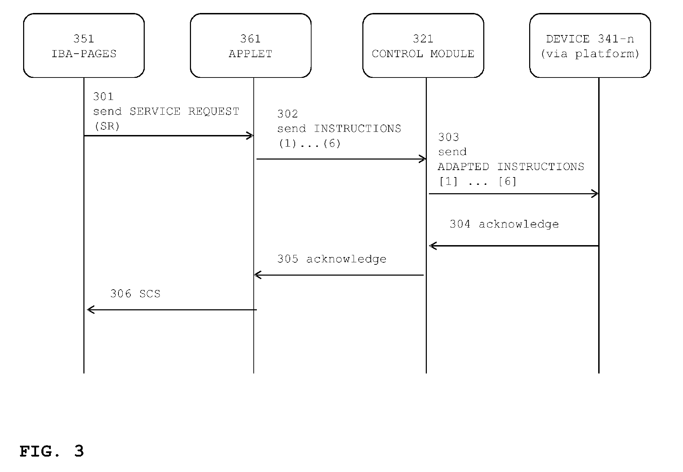

FIG. 3 illustrates a diagram for the communication that involves the service module in the terminal computer. FIG. 3 illustrates details for activity 240 (cf. FIG. 2). From left to right, FIG. 3 uses boxes to illustrate IBA-pages 351 (e.g., HTML page, running in browser 131), service module 361 (e.g., the JAVA applet, running in browser 131), control module 321 (running on top of the operating system or on the platform of the terminal manufacturer), and particular device 341-n that is installed in terminal computer 101. References 3xx in FIG. 3 correspond to references in FIG. 1. FIG. 3 further illustrates activities 301-306 by arrows that stand for signals, instruction, acknowledgments etc.

As mentioned, the service includes a sequence of steps. The service execution is now explained for the particular service "PRINT DOCUMENT" to the device being printer 341-n. The printer has been installed in a terminal that was manufactured by a company X. Simplified, the steps for this particular service can be:
(1) the printer prints a portion of the document on paper,
(2) the printer cuts the paper into a sheet
(3) the printer repeats (1)(2) until the document is printed completely
(4) the printer collects the sheets to a bundle
(5) the printer outputs the bundle to the user

The sequence can include extra steps. For example, extra step can handle errors that are caused by the printer, such as paper jam; or extra steps can handle situations caused by the user. For example, if the printer detects that the user does not take the paper after a predefined waiting time, the printer keeps the paper inside the terminal, such a step can be summarized as:
(6) conditionally retaining the paper.

In activity 301, IBA-pages 351 send service request SR (SR 171 in FIG. 1) to service module 361 (e.g., "DoPrintPDF", or "javascript do Print"). The service request can be implemented by JAVA SCRIPT. From the view point of the developer who writes the code for IBA-pages (and/or to provide the code for the IBA in system 104), there is no differentiation into various types of printers required.

In activity 302, service module 361 identifies the steps ((1) to (6) in the example) and forwards step instructions (1) to (6) to control module 321. In other words, service module 361 partitions the request into the number of steps. The step instructions can be pre-defined, and identifying the step can be accomplished by mapping, look-up tables, program logic or other techniques. Partitioning and step identification can also be implemented otherwise, for example, by control module 321.

In activity 303, control module 321 adapts the step instructions such that the particular printer can react accordingly.

In case the terminal is made by a different manufacturer Y, module 321 would adapt the instructions differently. More in general, the adaptation can include to map the commands to particular commands that are applicable for a terminal by a particular manufacturer. For the adaptation, control module 321 can interact with frameworks, run-time environments, or operating systems of the device (e.g., printer) In the example, instructions [1]x ... [6]x would go to a printer of a terminal made by manufacturer X, instructions [1]y ... [6]y would go to a printer of a terminal made by manufacturer Y.

In activity 304, optionally, the device 341-n acknowledges completion to control module / applet 321.

In activity 305, optionally, module 321 forwards the acknowledgement to service module 361.

Activities 302-305 can be performed multiple times, especially when the service to be performed comprises a number of steps. There are several modes to perform actions 302 to 305. Other options are also possible.

In activity 306, service module 361 forwards the acknowledgement to IBA-pages 351.

This described approach is advantageous. For example, actions 301 and action 306 from/to IBA-pages 351 hide the complexity of the services from the IBA, and hence from the designer of the IBA. The service particular steps are stored in the service module 361, and can be replaced or modified if needed. For example, the waiting time in step (6) can easily be re-defined, without the need to modify the code of IBA-pages 351. There is no need to modify control module 321.

The approach is also non-sensitive to different terminal manufacturers.

FIG. 3 illustrates a simplified acknowledgement. However, to is response to banking requirement, the acknowledgement can comprise multiple states. In the example, there are could be states: "printing completed" or "printing aborted". IBA-pages 351 receiving such an acknowledgement can continue accordingly, for example, to continue the interaction with the user, or to re-try printing.

The following overview shortly returns to FIG. 1 and provides further examples for functions that the devices and services perform:

Function Authentication: The devices are an encrypting pin-pad (EPP) and a card reader to authenticate the user. Simplified, the service module interacts with the control module to let the devices perform steps such as: (1) the reader reads the information from the card, (2) the EPP receives the PIN entry, encrypts it and forwards the data for processing (to a centralized computer), (3) depending on the processing result to output the card to the user, or to insert the card into the terminal..

Function Cash Output: The device is a cash dispenser that outputs cash to the user. In this respect, terminal computer 101 is also an automated teller machine (ATM). The service is the process of retrieve cash (paper money, or coins) from a cash box or cash repository, to present the cash to the user, and - similar as the printer - reinsert the cash to the terminal if not taken by the user.

Function Time-Out-User: Service module 161 receives a request that indicates that the user started a transaction. Control module 121 periodically monitors the user-interface elements, such as a touch-screen or a keyboard being the device. This monitoring result is provided to the service module 161 (and hence the IBA-pages 151). Service module 161 returns a statement to IBA-pages 151 in case the user-interface elements have not been used for a pre-determined time. The IBA-pages can react accordingly. For example, if a user session is still active while the statement arrives, then IBA-pages 151 can instruct service module 161 to perform a follow-up service, with steps such as return the card to the user and stop the transaction (e.g., DoEndSession, see above). Modifications are possible, for example, to program the if-then-logic into the service module 161.

This time-out function is related to a keep-alive scenario: In case that service module 161 has instructed a device to perform a service - for example, a printer to print a document - service module 161 periodically calls into IBA-pages 151 to communicate a signal that the service is ongoing. This function ensures that a time-out function by IBA-pages 151 is not triggered while the device continues to perform the service. Also, the IBA-pages 151 send a periodic keep-alive signal to service module 161. In case that connection 110 fails, service module 161 does not receive the keep-alive signal. As a consequence, service module 161 and control module 121 cancel the transaction and cause the card reader to output the card. Other alternatives are also possible. Potential further irregularities (e.g., the user not taking back the card) can be accommodated by a service. For example, service module 161 and control module 121 could instruct the card reader to retain the card.

Function Print to PDF: IBA-pages 151 have a command to print a document on Portable Document Format (PDF). In the first domain, home computer 102, browser 132 would just use the operating system, but with terminal computer 101 the following services is performed. Service module 161 re-interprets the command (service request 171) and interacts with a particular printer via control module 121. This can be advantageous for the developer of IBA-pages 151 (and IBA) who does not have to distinguish if a printing command is targeted to an regular printer (as used in Internet banking) or the printer in terminal computer 101.

The function Print to PDF can comprise a larger number of steps. Some steps can even call sub-sequence (or sub-services), so that the steps are executed in parallel and are related in hierarchy. For example, the steps can be: (1) taking over user interaction, with service module 161 acting in the foreground, (2) starting the sub-service "keep-alive", to ensure that IBA-pages 151 do not stop by time-out (3) downloading a file, via IP connection 110 from webserver 103 (4) initialize the printer 5) print the first page, via the printer driver of the operating system WINDOWS (6) start a sub-service to monitor the printer (7) cut the paper (8) move the printed paper into an escrow (9) print the next page, again via printer driver (10) cut the paper (11) move the printed paper into the escrow (12) output a bundle if the maximal number of papers is reached (13) monitor that the user has taken the paper (14) return IBA-pages 151 to be the foreground application and (15) ending the "keep-alive" sub-service.

In general, services and sub-services can be programmed to provide for error handling including error detection (e.g., paper jam or missing paper in a printer, incorrect position of a document in a scanner, illegible document in a scanner, incorrect PIN entry) and error mitigation (e.g., repetition of an action, retrieve the card, stop a transaction).

Steps can override the function of the pages. For example, while the pages 151 let browser 131 and screen present details for a transaction, a step can cause the screen to display a message, to instruct the user to interact with the terminal in a particular way (e.g., "please take the paper from the printer"). In such cases, the message would be overlaid to the transaction details.

A person of skill in the art can provide code (for the applet or for the control module) with instructions for further devices to perform services, such as: to scan documents, to establish a near field communication (NFC) with a mobile device, to input or output a video, to identify a user by biometry techniques, to let the user deposit cash, or the like.

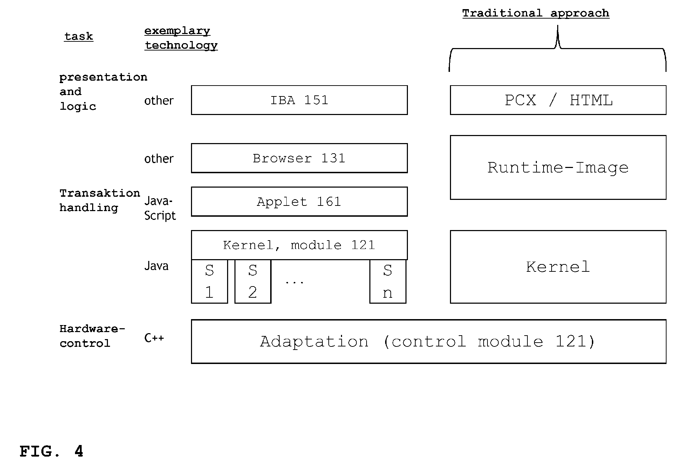

FIG. 4 illustrates a comparison between an embodiment and a traditional approach. FIG. 4 is arranged like a table with - from left to right - a task column, a technology column, a column that indicates the modules of FIG. 1, and a column that gives the traditional approach. Layers are given in top-down direction.

The traditional approach (with PCX/HTML, runtime-image, kernel) has been mentioned in the background section. According to the new approach, browser 131 executes IBA-pages 151 (JavaScript, HTML) for transaction handling, and applet 161 (Java) for step handling. Control module 121 can be integrated into the terminal client and can be available in C++.

Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, or liquid crystal display (LCD) monitor or light emitting diodes (LED) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

### References

- 100: computer system
- 101: terminal computer
- 102: home computer
- 103: web server
- 104: banking transaction system
- 105: maintenance server
- 110: IP connection
- 111: interface (terminal computer)
- 112: first interface (home computer)
- 121: control module (terminal computer)
- 122: second interface (home computer)
- 131: browser (terminal computer)
- 132: browser (home computer)
- 141: plurality of devices
- 151: internet banking application pages (IBA, terminal computer)
- 152: internet banking application pages (IBA, home computer)
- 161: service module (applet)
- 200, 210, 220, 230: method, actions
- 301 ... 306: activities, signals
- 351: internet banking application (IBA) pages
- 361: applet
- 321: control module
- 341-n: (particular) device

## Claims

1. A computer system (100), comprising:
a first computer (101) being a self-service banking terminal with a plurality of devices (141), the first computer (101) having a first internet browser (131);
a second computer (102) having a second internet browser (132);
a web server (103) connected to a banking transaction computer (104) and adapted to communicate with the first computer (101) and with the second computer (102) through an IP connection (110);
the computer system (100) being **characterized in that** the web server (103) is adapted to operate in parallel with both the first computer (101) and the second computer (102) through internet banking application pages (151, 152) to perform transactions with the banking transaction computer (104), wherein in the first computer (101), a service module (161) - upon receiving a service request (171) from the internet banking application page (151) - instructs the plurality of devices (141) to operate sequences of predefined steps.

2. The computer system (100) according to claim 1, wherein the internet banking application pages (151, 152) that run in the internet browsers (131, 132) of the first and second computers (101, 102) are substantially the same for both internet browsers (131, 132).

3. The computer system (100) according to claim 2, wherein the internet banking application pages (151, 152) that run in the internet browsers (131, 132) of the first and second computers (101, 102) is customized into versions for the first computer (101) and for the second computer (102), wherein customizing is implemented by distinctive sets of user interface elements.

4. The computer system (100) according to any of claims 1 to 3, wherein the service module (161) is implemented as an applet for the first internet browser (131) of the first computer (101).

5. The computer system (100) according to claim 4, wherein the applet is a JAVA applet and wherein the service requests from the internet banking application pages (151) are implemented by JAVA SCRIPT.

6. The computer system (100) according to claims 4 or 5, wherein in the first computer (101), the applet and the internet banking application pages (151) use the same run-time environment of the first internet browser (131).

7. The banking terminal (101) according to any of claims 1 to 6, **characterized in that** the terminal computer (101) receives the internet banking application pages (151) and the service module (161) from the web server (103) and **in that** the service module triggers the operation of the internet banking application pages (151).

8. Computer-implemented method (200) for initialising the operation of internet banking application pages (151) to be executed in the run-time environment of a browser (131) in a terminal computer (101) that has a plurality of devices (141) that perform services as sequences of steps, the method (200) comprising:
receiving (210) at the terminal computer (101), an applet (161) from a web server (103) via an IP connection (110);
starting (220) to execute the applet (161) by the run-time environment of the browser (131); and
initialising (230), under control of the applet (161), the reception of the internet banking application pages (151) from the web server (103) and causing the run-time environment of the browser to execute the internet banking application pages (151).

9. The computer-implemented method (200) according to claim 8, further with operating the internet banking application pages (151) in communication with the plurality of devices (141), such that the applet (161/361) or a control module (121):
receives (301) a service request (171) from the internet banking application pages (151/351), and
forwards (302) a sequence of instructions ((1)... (6)) for steps that correspond to the service request (171), to at least one particular device (141-n) of the plurality of devices for execution.

10. The computer-implemented method (200) according to claim 9, wherein the service request (171) and the sequence of instructions for steps are selected from the group of:
a service request (171) for user authentication, with corresponding instructions for steps that include to operate a card reader, to operate an encrypting pin-pad (EPP);
a service request (171) for printing, with corresponding instructions for steps that include to operate a printer to present a printed document to a user and to physically return the printed document into the first computer if the user does not take the printed document after a predefined period;
a time-out request (171) for user interaction, with corresponding instructions for steps to periodically check if user interface devices receive input from the user;
a service request (171) for document scanning, with corresponding instructions to a document scanner, and to process the document with optical character recognition (OCR);
a service request (171) for function monitoring, with corresponding instructions from the application pages (151) to signal the availability of the application pages (151) to the applet (161);
a service request (171) for logging data in a journal, with corresponding instructions for steps that include to collect data that relate to the operation of the internet banking application;
a service request (171 to obtain technical information directed to the applet (161),
with corresponding instructions for steps to terminate a customer session;
a service request (171) to obtain technical information, with corresponding instructions for steps that include to detect the current states of the devices (141);
a service request (171) to obtain technical information, with corresponding instructions for steps that include to detect if the user has interacted with a device of the terminal within a predetermined period of time;
a service request (171) to obtain technical information with corresponding instructions for steps that include to detect the current states of connections to external systems, the external systems being a banking transaction system and a maintenance server;
a service request (171) to obtain technical information, with corresponding instructions for steps that include to detect the current state for a printer;
a service request (171) to obtain technical information, with corresponding instructions for steps that include the detection of the current state for a document scanner;
a service request (171) to obtain technical information, with corresponding instructions for steps that include the reporting of current event messages;
a service request (171) to obtain technical information, with corresponding instructions for steps that include the reporting of events in connections with the hardware of the devices; and
a service request (171) to obtain technical information, with corresponding instructions for steps that include the reporting of alert events, such as alert events for the printer and the document scanner.

11. The computer-implemented method (200) according to claim 9, wherein the sequence of instructions for steps include acknowledgements that the applet (161/361) receives from the particular device (141-n).

12. The computer-implemented method (200) according to any of claims 8 to 11, wherein the applet (161/361) forwards (302) the sequence of instructions ((1)... (6)) for steps to the particular device (141-n) through a control module (121/321).

13. The computer-implemented method (200) according to claim 12, wherein the applet (161/361) forwards (302) the sequence of instructions ((1)... (6)) through the control module (121/321) being a module that runs on top of the operating system of the terminal computer (101) and that provides abstraction for devices built into terminals from different terminal manufacturers.

14. A computer program product that when loaded into a memory of a terminal computer (101) and being executed by at least one processor of the terminal computer (101) performs the steps of the computer-implemented method according to any of claims 8 to 13.

15. A banking terminal (101), having an interface (111) to communicate via an IP connection (110) with a web server (103), the banking terminal (101) having a control module (121) to control a plurality of devices (141), a browser (131) to execute internet banking application pages (151) to communicate with the web server (103) via the interface (111); the banking terminal (101) **characterized by** further having a service module (161) that establishes the communication with the internet banking application pages (151), and that - upon receiving a service request (171) from the internet banking application pages (151) - accesses at least a particular device of the plurality of devices (141) to perform a sequence of predefined steps that correspond to the service request (171).
